# EUROPÄISCHE PATENTANMELDUNG

(11) **EP 0 679 825 A1**
(43) Veröffentlichungstag der Anmeldung: **02.11.1995**
(21) Anmeldenummer: 95106343.7
(22) Anmeldetag: 27.04.1995
(51) Int. Cl.: F16L 9/12, F16L 11/12

(54) **Extrudierte Polymer-Mono- oder Mehr-schicht-Schlauch- oder Rohrleitung**

(30) Priorität: 28.04.1994 CH 1322/94
(71) Anmelder: EMS-INVENTA AG, CH-8001 Zürich (CH)
(72) Erfinder: Flepp, Albert, Dipl.-Ing. HTL, CH-7013 Domat/Ems (CH)
(74) Vertreter: Müller-Boré & Partner Patentanwälte

(57) **Zusammenfassung**

Die Erfindung betrifft eine extrudierte Polymer-Schlauch- oder Rohrleitung mit mindestens einer Polyphenylensulfid-Barriereschicht und mindestens einer Polyamidschutzschicht, wobei sie haftvermittlerfrei ist, und die Innenschicht durch Corona-Behandlung soweit aktiviert worden ist, daß sie zu ihrer Nachbarschicht verträglich ist. Die Erfindung betrifft weiterhin ein Verfahren zur Herstellung einer Mehrschicht-Polymer-Schlauch- oder Rohrleitung mit mindestens einer Polyphenylensulfid-Barriereschicht, wobei das Verfahren die folgenden Schritte enthält:
- Extrusion der Innenschicht,
- Corona-Behandlung der Innenschicht,
- Extrusion der äußeren Schicht mit mit geeignetem Ummantelungswerkzeug, wobei für zusätzlich extrudierte Schichten gegebenenfalls vorgängig weitere Corona-Behandlungsschritte vorgenommen werden können.

## Beschreibung

Die Erfindung betrifft den in den Patentansprüchen angegebenen Gegenstand.

Seit längerer Zeit werden in Kraftfahrzeugen als Kraftstoffleitungen neben sogenannten Monorohren, die aus einer einzigen Schicht aus Polyamid 11 oder 12 extrudiert werden, auch Mehrschichtrohre aus Polymeren eingesetzt.

So sind aus den DE-35 10 395 C2, DE-38 27 092 C1 und EP-04 28 834 A2 Kraftstoffleitungen bekannt, bei denen Ethylen/Vinylalkohol-Copolymere als Barriereschichten vorgesehen sind.

Ethylen/Vinylalkohol-Copolymere mit den geforderten Barriereeigenschaften sind bekannt als außerordentlich brüchige Polymere mit sehr geringer Reißdehnung. Diese Polymere können daher auch nur in geringen Schichtdicken verwendet werden. Darüber hinaus sind diese Polymere bei der Verarbeitung im Extrusionsprozeß und im speziellen bei der Coextrusion mit thermoplastischen Polymeren bei Verarbeitungstemperaturen über 200 °C nicht thermostabil. Bei diesen Temperaturen erfolgt eine Vernetzunng des Polymeren, was zu Gelteilbildung führt. In Folien, für welche diese Ethylen/Vinylalkohol-Copolymere entwickelt wurden, kann eine Gelteilbildung sofort erkannt werden und führt aus optischen und ästhetischen Gründen zur Aussonderung. Bei dickwandigen Rohren mit eingefärbten Polymeren sind Gelteile jedoch nicht sichtbar, aber qualitätsmindernd. Damit stellen sich außerordentlich hohe Anforderungen an die Qualitätssicherung.

In der DE-38 21 723 C1 wird als Lösung ein Dreischichtrohr vorgeschlagen mit einer rohrinnenseitigen geschlossenen Beschichtung aus Polyolefin und äußeren Schutzschichten aus Polyamid. Aus Literatur und Permeationsmessungen ist bekannt, daß Polyolefine eine gute Barriere gegen Alkohole und Polyamide eine gute Barriere gegen Kohlenwasserstoffe bilden. Kraftstoffe für Kraftfahrzeuge sind aber häufig Gemische aus Kohlenwasserstoffen und Alkoholen.

DE-38 27 092 C1 schützt ein coextrudiertes Mehrschicht-Rohr aus Polymeren, das durch eine außen aufgebrachte Polyester-Schutzschicht thermisch kurzzeitig bis 180 °C belastbar wird.

Die DE-42 14 383 C1 schützt eine gattungsmäßige mehrschichtige Schlauch- oder Rohrleitung mit einer Barriereschicht aus Polyester, für die wegen der ungenügenden Haftung speziell zu Polyamiden in den weiteren Schichten zusätzliche Haftvermittlerschichten zwingend erforderlich sind. Für die Extrusion solcher Haftvermittelerschichten sind zusätzliche Aufschmelz- oder Verarbeitungseinrichtungen erforderlich.

Aufgabe der Erfindung ist es deshalb eine Schlauch- oder Rohrleitung vorerwähnten Art zu schaffen, die eine für die heutigen Umweltschutz- und Sicherheitsbestimmungen ausreichend geringe Permeation zeigt, ohne die vorstehend geschilderten Nachteile aufzuweisen.

Diese Aufgabe wird durch eine Polymer-Schlauch- oder Rohrleitung mit Barrierewirkung gemäß den kennzeichnenden Merkmalen des Anspruchs 1 gelöst.

Sie wird speziell gelöst durch eine haftungsvermittlerfreie Mehrschicht-Polymer-Rohrleitung, die aus mindestens einer Barriereschicht aus Polyphenylensulfid, die bevorzugt die Innenschicht darstellt, und mindestens einer Polymer-Schutzschicht, die bevorzugt aus Polyamid besteht.

Darüber hinaus können ungenügende Eigenschaften der Polyphenylensulfid-Barriereschicht im Verbund mit weiteren Schichten ausgeglichen und verbessert werden, wie es auch durch eine Schutzschicht aus Polyamid geschieht.

Es wurde festgestellt, daß überraschenderweise die Verträglichkeit der innenliegenden Barriereschicht aus Polyphenylensulfid zu der mindestens eine weiter außenliegenden Schutzschicht aus anderen thermoplastischen Polymeren, speziell zu Polyamiden, durch eine Corona-Behandlung so stark verbessert wird, daß zusätzlich Haftvermittlerschichten überflüssig werden.

Diese erfindungsgemäß eingesetzte Corona-Behandlung, die an sich nur für die Vorbehandlung von Polyolefin-Filmen zum Bedrucken bekannt ist, ist eine steuerbare elektrische Oberflächenbehandlung des Polymer-Rohres mittels Hochfrequenzspannung, bevorzugt bis zu 56 KV im Bereich bis zu 25 KHz. Sie wird in vorteilhafter Weise on-line durchgeführt und gestattet die Oberfläche des behandelten Gegenstands soweit zu aktivieren, daß die Voraussetzung für eine einwandfreie, dauerhafte und gleichmäßige Haftung gegeben ist. Die Corona-Behandlungsdauer beträgt 0,05 bis 1,0 sec., bevorzugt 0,1 bis 0,5 sec.

Die Schutzschichten der erfindungsgemäßen Schlauch- oder Rohrleitung bestehen bevorzugt aus Polyamid. Als Polyamide werden vorteilhaft Polykondensate aus aliphatischen Lactamen oder ω-Aminocarbonsäuren mit 4 bis 44 Kohlenstoffatomen oder solche aus aromatischen ω-Aminosäuren mit 6 bis 20 Kohlenstoffatomen eingesetzt. In gleicher Weise geeignet sind Polykondensate aus mindestens einem Diamin und mindestens einer Dicarbonsäure mit jeweils 2 bis 44 Kohlenstoffatomen. Beispiele für solche Diamine sind Ethylendiamin, 1,4-Diaminobutan, 1,6-Diaminohexan, 1,10-Diaminodecan, 1,12-Diaminododecan, meta- und para-Xylylendiamin Cyclohexyldimethylamin, Bis-(p-aminocyclohexyl)-methan und seine Niedrigalkylderivate. Beispiele für Dicarbonsäuren sind Bernstein-, Glutar-, Adipin-, Pimelin, Kork-, Azelain- und Sebazinsäure, Dodecandicarbonsäure, 1,6-Cyclohexandicarbonsäure, Terephthalsäure, Isophthalsäure und Naphthalindicarbinsäure. Dabei sind die Homo- und Copolyamide auf Basis PA6, PA11, PA12, PA66, PA1212, PA1012, PA612, PA69, PA6T, PA6I, PA12T, PA12I besonders bevorzugt. Die erfindungsgemäßen Polyamide können die üblichen Zusatzstoffe enthalten wie UV- und Hitzestabilisatoren, Kristallisationsbeschleuniger, Weichmacher, Flammschutzmittel, Gleitmittel, anorganische Füllstoffe und Additive, welche die elektrische Leitfähigkeit erhöhen.

Die erfindungsgemäßen Mehrschicht-Rohrleitungen zeichnen sich in vorteilhafter Weise aus durch
- die besonders gute Verarbeitbarkeit des Polyphenylensulfids zur Barriereschicht,
- die gegenüber den zur Zeit üblichen Motor-Kraftstoffen besonders gute Sperrwirkung des Polyphenylensulfids, die denjenigen des Polyesters und besonders des Polybutylenterephthalats überlegen ist bei gleichzeitig geringeren Rohstoffkosten.

Speziell für alkoholhaltige Benzine werden deutlich niedrigere Permeationswerte gefunden als bei Mehrschichtrohren, welche als Barriereschicht Polyvinylalkohole enthalten. Die erfindungsgemäßen Leitungen sind chemisch beständig gegen die gängigen Treibstoffe, Motoröle, im Automobilbbereich verwendete Säuren und gegen Streusalze, speziell Zinkchlorid.

Die erfindungsgemäßen Rohrleitungen widerstehen Oxidationsprozessen durch agressive Kraftstoffe (sourgas) und sind beständig gegen erhöhte Temperatur und Bestrahlung. Auch bei tiefen Temperaturen besitzen sie eine gute Schlagzähigkeit, so daß der Schlagtest nach SAE J 844 bei -40 °C bestanden wird.

Der erreichte Berstdruck entspricht ebenfalls der für Benzinleitungen gültigen Norm DIN 73378, welche eine Vergleichsspannung oder "hoop strength" von mindestens 20 N/mm² vorschreibt. Die Leitungen lassen sich durch Wärmeeinwirkung verformen, wodurch auch komplizierte geometrische Anordnungen leicht zugänglich sind.

Beispiele für Ausführungsvarianten mit Schichtaufbau von innen nach außen sind:
PPS/PA11, PPS/PA12
PPS/PA6, PPS/PA66
Bevorzugt sind 2 Schicht-Rohrleitungen mit einer Barriere-Innenschicht aus PPS mit 0,2 bis 0,7 mm Schichtdicke und einer Schutzaußenschicht aus PA12 mit 0,2 bis 0,8 Schichtdicke.

Besonders vorteilhaft ist, daß die Barriereschicht ohne Komplikation in Herstellung und Gebrauch bis 2,0 mm Dicke ausgeführt sein kann. Von besonderem Vorteil ist jedoch grundsätzlich, daß die erfindungsgemäßen Schlauch- oder Rohrleitungen auf Grund der verbesserten Barrierewirkung mit dünneren Wandstärken und damit kostensparender hergestellt werden können, als die Leitungen nach dem zitierten Stand der Technik.

Es ist auch möglich, die Wandung der Schlauch- oder Rohrleitung mit einer ring- oder spiralförmigen Wellung zu versehen, die Schutzschichten antstatisch, schlagzäh oder mit Weichmachern oder anderen Additiven nach dem Stand der Technik zu modifizieren bzw. durch Zugabe von Glasfasern längenstabil zu machen.

Die Permeationsmessungen wurden mit einer dynamischen Meßanordnung bei 60 °C und 4 bar durchgeführt. Als Testbenzin für einzelne Polymer-Typen wurden die Kraftstoffe FAM A nach DIN 51604 A, ein Gemisch aus 50 Gew.-% Toluol, 30 Gew.-% Isooctan, 15 Gew.-% Diisobutan und 5 Gew.-% Methanol, FAM A mit 35 Gew.-% Methanol bzw. Methanol eingesetzt. Als Testbenzin für Rohre gemäß den Beispielen wurden FAM B nach DIN 51604 B, ein Gemisch aus 42,25 % Toluol, 25,35 % Isooctan, 12,68 % Diisobutan, 4,23 % Ethanol, 15 % Methanol und 0,5 % Wasser, sowie Haltermann-Normbenzin mit 35 % Methanol benutzt. Ihre Resultate nach 24 Stunden in g/m² belegen eindrücklich die Überlegenheit von Polyphenylensulfid (PPS).
- Figur 1: Permeationswerte von FAM A in verschiedenen Polymeren,
- Figur 2: Permeationswerte von FAM A mit 35 Vol.-% Methanol in verschiedenen Polymeren,
- Figur 3: Permeationswerte von Methanol in verschiedenen Polymeren .

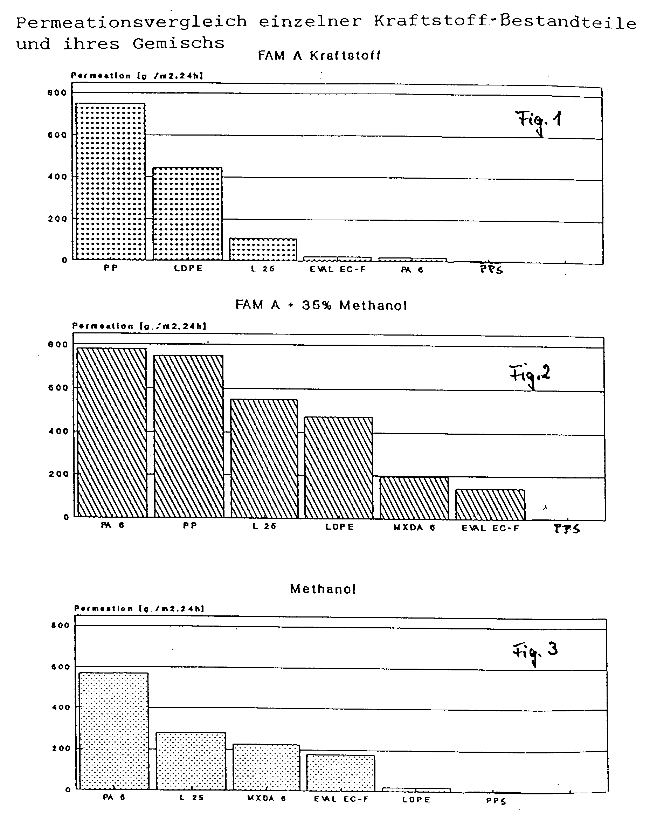

### Beispiel 1

Innenschicht 0,6 mm PPS und Außenschicht 0,4 mm PA12.
Der Gesamtrohrdurchmesser beträgt 8 mm.

### Vergleichsbeispiel 1

Monorohr aus PA12, 8 x 1 mm Durchmesser.

### Vergleichsbeispiel 2 (DE-35 10 395)

5-Schichtrohr 8 x 1 mm Durchmesser (Schichten sind von innen nach außen angegeben): 0,45 mm PA6, 0,15 mm EV OH, 0,05 mm PA6, 0,05 mm PP, MSA gepfropft und 0,3 mm PA12.

Der Vergleich der Permeationswerte der erfindungsgemäßen Rohre mit solchen zur Zeit in Kraftfahrzeugen eingesetzten, ist der nachfolgenden Tabelle I zu entnehmen.

**Tabelle I**

| | Permeation [g/m² h] FAM B | Permeation [g/m² h] Haltermann / 35 % Methanol |
|---|---|---|
| Beispiel 1 | 0,4 | 0,4 |
| Vergleichsbeispiel 1 | | 16,4 |
| Vergleichsbeispiel 2 | 5,1 | 6,2 |
| Vergleichsbeispiel 3 | 1,0 | 1,1 |

Speziell vorteilhaft ist, daß die erfindungsgemäßen Rohrleitungen keine Haftvermittlerschicht benötigen und somit kostengünstig herzustellen sind. Die regelbare Corona-Behandlung gestattet auch die einzustellende Haftung exakt zu regeln. Gleichzeitig ermöglicht die stufenweise Extrusion die direkte Kontrolle der Gleichmäßigkeit jeder einzelnen Schicht während der Produktion.

In besonderen Ausführungsformen kann die Rohrleitung aus weiteren funktionellen Schichten bestehen. Dabei muß Verträglichkeit zwischen benachbarten Schichten bestehen oder diese Verträglichkeit muß hergestellt sein, z.B. durch eine Corona-Behandlung der jeweils innenliegenden Schicht vor dem Aufbringen der nächsten Schicht.

Die Erfindung betrifft auch ein Verfahren zur Herstellung einer Mehrschicht-Polymer-Rohrleitung, die mindestens eine PPS-Barriereschicht gemäß dem Anspruch 1 enthält, welche nach der Extrusion eines PPS-Rohres als Innenschicht eine Corona-Behandlung dieses Rohres vorsieht, welche bevorzugt beidseitig, d.h. um 180 ° versetzt erfolgt und in vorteilhafter Weise mit dem Aufbringen der äußeren Schicht, d.h. nacheinander on-line ausgeführt werden kann.

Weiter betrifft die Erfindung Mehrschicht-Polymer-Rohrleitungen, die nach dem obengenannnten Verfahren herstellbar sind.

## Patentansprüche

1. Extrudierte Polymer- Mono- oder Mehrschichtrohrleitung mit Barrierewirkung, dadurch gekennzeichnet, daß sie aus mindestens einer Polyphenylensulfidschicht besteht.

2. Schlauch- oder Rohrleitung, dadurch gekennzeichnet, daß sie aus mindestens einer Polyphenylensulfid-Barriereschicht und mindestens einer Schutzschicht besteht und daß sie haftvermittlerfrei ist, wobei die Polyphenylensulfidschicht als Innenschicht durch Corona-Behandlung soweit aktiviert worden ist, daß sie zu ihrer Nachbarschaft verträglich ist.

3. Rohrleitung nach Anspruch 1, dadurch gekennzeichnet, daß das Polymer der Schutzschicht ein Polyamid ist, ausgewählt aus der Gruppe PA6, PA11, PA12, PA66, PA1212, PA1012, PA612, PA69, PA6T, PA6I, PA12T, PA12I, deren Copolyamide und deren Gemische.

4. Rohrleitung nach einem der Ansprüche 1 bis 3, dadurch gekennzeichnet, daß sie aus mindestens einer weiteren funktionellen polymeren Schicht besteht, die zu ihren Nachbarschichten verträglich ist oder deren Verträglichkeit hergestellt wurde.

5. Rohrleitung nach einem der Ansprüche 1 bis 4, dadurch gekennzeichnet, daß sie zumindest auf einem Teilstück eine ring- oder spiralförmige Wellung der Innenschicht oder aller Schichten aufweist.

6. Verfahren zur Herstellung einer Polymer-Mehrschicht-Schlauch- oder Rohrleitung mit mindestens einer Polyphenylensulfid-Barriereschicht, insbesondere nach einem der Ansprüche 2 bis 5, dadurch gekennzeichnet, daß es die folgenden Schritte enthält:
- Extrusion der Barriereschicht,
- Corona-Behandlung der Innenschicht,
- Extrusion der Schutzschicht mit geeignetem Ummantelungswerkzeug,
wobei für zusätzlich extrudierte Schichten gegebenenfalls vorgängig weitere Corona-Behandlungsschritte vorgenommen werden können.

7. Verfahren nach Anspruch 6, dadurch gekennzeichnet, daß die Verfahrensschritte on-line erfolgen.

8. Polymer-Mehrschicht-Rohrleitung mit Barrierewirkung, herstellbar nach dem Verfahren gemäß einem der Ansprüche 6 oder 7.
